# EUROPÄISCHE PATENTSCHRIFT

(11) **EP 1 984 452 B1**
(45) Veröffentlichungstag und Bekanntmachung des Hinweises auf die Patenterteilung: **08.07.2009**
(21) Anmeldenummer: 07712152.3
(22) Anmeldetag: 06.02.2007
(51) Int. Cl.: C08L 97/00

(54) **VERFAHREN ZUR HERSTELLUNG VON FORMTEILEN AUS KORKPARTIKELN**
PROCESS FOR PRODUCING MOULDINGS FROM CORK PARTICLES
PROCEDE DE FABRICATION D'ELEMENTS MOULES A PARTIR DE PARTICULES DE LIEGE

(30) Priorität: 13.02.2006 DE 102006006579
(43) Veröffentlichungstag der Anmeldung: 29.10.2008
(73) Patentinhaber: Wacker Chemie AG, 81737 München (DE)
(72) Erfinder: PFAADT, Marcus, 84489 Burghausen (DE)
(74) Vertreter: Schuderer, Michael
(86) Internationale Anmeldenummer: PCT/EP2007/051102
(87) Internationale Veröffentlichungsnummer: WO 2007/093521

(56) Entgegenhaltungen:
- DD-A1- 213 877
- DE-A1- 19 949 593
- US-A- 4 042 543

## Beschreibung

Die Erfindung betrifft ein Verfahren zur Herstellung von Formteilen aus Korkpartikeln, wobei die Korkpartikel mit thermoplastischen Polymeren gebunden werden.

Bei der Herstellung von Korkstopfen zur Herstellung von Flaschenkorken fallen jährlich erhebliche Abfallmengen an Kork an. Diese werden zu Korkgranulat(mehl) (Transferkork) gemahlen und dienen als Rohstoffbasis für die Herstellung von Formkörpern aus Korkpartikeln. Dazu werden die Korkpartikel mit synthetischen Polymerisaten gemischt und anschließend zu Formkörpern gepresst.

Aus der DE 1 620 777 A ist bekannt, Korkformteile aus Korkgranulat und Polyurethan herzustellen. Nachteilig ist bei der Verwendung von Polyurethan als Bindemittel für granulären Kork, dass die damit erhaltenen Formteile nicht mehr thermoplastisch nachverarbeitbar sind.

Die DE 196 29 017 betrifft ebenfalls die Bindung von Korkteilchen mit Polyurethan, es wird darin aber auch der Einsatz von thermoplastischen Polymeren als Bindemittel beschrieben. In der Korkverarbeitung sind Ethylen-Vinylacetat-Copolymere, Polyvinylchlorid und thermoplastische Elastomere (TPE) die üblichen thermoplastischen Bindemittel. Mit thermoplastischen Polymerisaten wird die thermoplastische Verarbeitung von Korkpartikeln mittels Extrusion oder Kalandrierung ermöglicht. Nachteilig ist aber der hohe Anteil an Thermoplast von meist 50 bis 70 Gew.-%, bezogen auf das Gesamtgewicht des Formkörpers, der eingesetzt werden muß um die erforderliche mechanische Festigkeit zu erhalten. Ein weiterer Nachteil besteht darin, dass aufgrund des hohen Polymeranteils die Formkörper nicht mehr das Erscheinungsbild von natürlichem Kork aufweisen.

Gegenstand der DE 199 49 593 A1 sind im wesentlichen polymere Bindemittel auf der Basis eines wasserunlöslichen Polymerisats A1, eines wasserlöslichen Polymerisats A2, welches zu 50 bis 100 Gew.-% aus ethylenisch ungesättigten Mono- oder Dicarbonsäuren aufgebaut ist, wobei ein Hydroxylgruppen aufweisendes Amin als Vernetzer fungiert, und dieses Amin separat vorliegt oder im wasserlöslichen Polymerisat als Ester einer ungesättigten Carbonsäure copolymerisiert vorliegt. Es handelt sich um thermisch härtbare polymere Bindemittel, und diese bewirken die Vernetzung der Komponenten der Bindemittel und der Substratmaterialien, wie beispielsweise Korkschnitzel, zu den entsprechenden, ausgehärteten Formkörpern . Aus dieser Anmeldung geht nicht hervor, wie Formteile mit hoher mechanischer Festigkeit erhalten werden können, wenn als Bindemittel thermoplastische Polymere eingesetzt werden, die im Zuge der Herstellung der Formteile nicht ausgehärtet werden.

Es bestand daher die Aufgabe, ein Verfahren zu entwickeln mit welchem sich Formteile aus Korkpartikeln und thermoplastischen Polymeren herstellen lassen, welches geringere Einsatzmengen an Thermoplast ermöglicht, trotzdem hohe mechanische Festigkeit der Formkörper sicherstellt, deren thermoplastische Nachbearbeitung ermöglicht und mit welchem Formkörper mit natürlichem Korkerscheinungsbild zugänglich werden.

Gegenstand der Erfindung ist ein Verfahren zur Herstellung von Formteilen aus Korkpartikeln wobei die Korkpartikel mit thermoplastischen Polymeren gebunden werden, dadurch gekennzeichnet, dass das thermoplastische Polymer in Form dessen in Wasser redispergierbaren Polymerpulvers, enthaltend ein oder mehrere Polymerisate, auf der Basis von einem oder mehreren Monomeren aus der Gruppe umfassend Vinylester, (Meth)-acrylsäureester von unverzweigten oder verzweigten Alkoholen mit 1 bis 15 C-Atomen, Vinylaromaten, olefine, 1,3-Diene und Vinylhalogenide und gegebenenfalls 0.1 bis 5 Gew.-%, bezogen auf das Gesamtgewicht des Monomergemisches, Hilfsmonomere, ein oder mehrere Schutzkolloide aus der Gruppe umfassend teilverseifte oder vollverseifte Polyvinylalkohole, Polyvinylpyrrolidone, Polyvinylacetale, Stärken, Cellulosen und deren Derivate, Proteine wie Casein oder Caseinat, Sojaprotein, Gelatine, Ligninsulfonate, Poly(meth)acrylamid, Polyvinylsulfonsäuren und deren wasserlöslichen Copolymere, Melaminformaldehydsulfonate, Naphthalinformaldehydsulfonate, sowie gegebenenfalls Antiblockmittel, eingesetzt wird.

Als in Wasser redispergierbare Polymerpulver bezeichnet man Pulverzusammensetzungen, welche mittels Trocknung der entsprechenden wässrigen Dispersionen von Polymerisaten in Gegenwart von Schutzkolloiden zugänglich werden. Aufgrund dieses Herstellungsprozesses wird das feinteilige Harz der Dispersion mit einem wasserlöslichen Schutzkolloid ausreichender Menge umhüllt. Bei der Trocknung wirkt das Schutzkolloid wie ein Mantel, welcher das Zusammenkleben der Teilchen verhindert. Beim Redispergieren in Wasser löst sich das Schutzkolloid wieder in Wasser und es liegt eine wässrige Dispersion der ursprünglichen Polymerteilchen vor (Schulze J. in TIZ, No. 9, 1985).

Geeignete Polymerisate sind solche auf der Basis von einem oder mehreren Monomeren aus der Gruppe umfassend Vinylester, (Meth)acrylsäureester, Vinylaromaten, Olefine, 1,3-Diene und Vinylhalogenide und gegebenenfalls weiteren damit copolymerisierbaren Monomeren.

Geeignete Vinylester sind solche von Carbonsäuren mit 1 bis 12 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise,- VeoVa9^{R} oder VeoVa10^{R} (Handelsnamen der Firma Resolution). Besonders bevorzugt ist Vinylacetat.

Geeignete Monomere aus der Gruppe Acrylsäureester oder Methacrylsäureester sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0.1 bis 5 Gew.-%, bezogen auf das Gesamtgewicht des Monomergemisches, Hilfsmonomere copolymerisiert werden. Bevorzugt werden 0.5 bis 2.5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Die Monomerauswahl bzw. die Auswahl der Gewichtsanteile der Comonomere erfolgt dabei so, dass im allgemeinen eine Glasübergangstemperatur Tg von ≤ 120°C, vorzugsweise -40°C bis +120°C, am meisten bevorzugt -20°C bis +80°C, resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Bevorzugt werden Homo- oder Mischpolymerisate, welche ein oder mehrere Monomere aus der Gruppe Vinylacetat, Vinylester von αverzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten. Besonders bevorzugt werden Mischpolymerisate mit Vinylacetat und Ethylen; mit Vinylacetat, Ethylen und einem Vinylester von α-verzweigten Monocarbonsäuren mit 9 bis 11 C-Atomen; mit n-Butylacrylat und 2-Ethylhexylacrylat und/oder Methylmethacrylat; mit Styrol und einem oder mehreren Monomeren aus der Gruppe Methylacrylat, Ethylacrylat, Propylacrylat, n-Butylacrylat, 2-Ethylhexylacrylat; mit Vinylacetat und einem oder mehreren Monomeren aus der Gruppe Methylacrylat, Ethylacrylat, Propylacrylat, n-Butylacrylat, 2-Ethylhexylacrylat und gegebenenfalls Ethylen; mit 1,3-Butadien und Styrol und/oder Methylmethacrylat sowie gegebenenfalls weiteren Acrylsäureestern; wobei die genannten Gemische gegebenenfalls noch ein oder mehrere der obengenannten Hilfsmonomere enthalten können.

Die Herstellung der Polymerisate erfolgt in bekannter Weise nach dem Emulsionspolymerisationsverfahren oder nach dem Suspensionspolymerisationsverfahren in Gegenwart von Schutzkolloiden, vorzugsweise nach dem Emulsionspolymerisationsverfahren, wobei die Polymerisationstemperatur im allgemeinen 20° C bis 100°C, vorzugsweise 60°C bis 90°C beträgt, und bei der Copolymerisation von gasförmigen Comonomeren wie Ethylen auch unter Druck, im allgemeinen zwischen 5 bar und 100 bar, gearbeitet werden kann. Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Zur Steuerung des Molekulargewichts können während der Polymerisation regelnde Substanzen eingesetzt werden. Zur Stabilisierung werden Schutzkolloide, gegebenenfalls in Kombination mit Emulgatoren, eingesetzt.

Zur Stabilisierung des Polymerisationsansatzes gebräuchliche Schutzkolloide sind beispielsweise teilverseifte oder vollverseifte Polyvinylalkohole; Polyvinylpyrrolidone; Polyvinylacetale; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylamid, Polyvinylsulfonsäuren und deren wasserlöslichen Copolymere; Melaminformaldehydsulfonate, Naphthalinformaldehydsulfonate. Bevorzugt werden teilverseifte oder vollverseifte Polyvinylalkohole. Besonders bevorzugt sind teilverseifte Polyvinylalkohole mit einem Hydrolysegrad von 80 bis 95 Mol% und einer Höpplerviskosität in 4 %-iger wässriger Lösung von 1 bis 30 mPas (Methode nach Höppler bei 20°C, DIN 53015).

Die damit erhältlichen wässrigen Dispersionen haben einen Feststoffgehalt von 30 bis 75 Gew.-%, vorzugsweise von 50 bis 60 Gew.-%.

Zur Herstellung der in Wasser redispergierbaren Polymerpulver-Zusammensetzungen werden die Dispersionen, gegebenenfalls nach Zusatz von weiteren Schutzkolloiden als Trocknungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt. Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

In der Regel wird die Trocknungshilfe in einer Gesamtmenge von 0.5 bis 30 Gew.-%, bezogen auf die polymeren Bestandteile der Dispersion, eingesetzt. Das heißt die Gesamtmenge an Schutzkolloid vor dem Trocknungsvorgang soll mindestens 1 bis 30 Gew.-%, bezogen auf den Polymeranteil betragen; bevorzugt werden insgesamt 5 bis 20 Gew.-% Schutzkolloid, bezogen auf den filmbildenden Polymeranteil, eingesetzt.

Geeignete Trocknungshilfen sind beispielsweise die bereits genannten Schutzkolloide.

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise 1 bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline wie Metakaolin, Silicate mit Teilchengrößen vorzugsweise im Bereich von 10 nm bis 10 µm.

Am meisten bevorzugt werden Redispersionspulver-Zusammensetzungen enthaltend Mischpolymerisate mit Vinylacetat und Ethylen oder Mischpolymerisate mit Vinylacetat, Ethylen und einem Vinylester von α-verzweigten Monocarbonsäuren mit 9 bis 11 C-Atomen als Basispolymerisat und teilverseiftem Polyvinylalkohol als Schutzkolloid.

Die Korkpartikel liegen in Form von Granulat oder Korkmehl mit einer mittleren Korngröße von 0,05 bis 500 mm vor. Geeignet sind vor allem auch Korkpartikel, welche als Abfallprodukt bei der Herstellung anderer Korkartikel wie Flaschenkorken anfallen (Transferkork) und beispielsweise mittels Mahlen auf die gewünschte Korngröße gebracht werden.

Zur Herstellung der Formkörper wird das in Wasser redispergierbare Polymerpulver mit den Korkpartikeln vermischt, beispielsweise in einem Heißmischer. Das Polymerpulver wird dabei in einem Anteil von 4 bis 70 Gew.-%, vorzugsweise 10 bis 60 Gew.-%, am meisten bevorzugt 10 bis 40 Gew.-%, jeweils bezogen auf das Gesamtgewicht aus Kork und Polymer, zugegeben, und mittels der üblichen thermoplastischen Umformungstechniken wie Extrudieren, Spritzgießen, Verpressen, Granulieren und Kalandrieren zu Formkörpern verarbeitet. Die Verarbeitungstemperatur beträgt im allgemeinen 60°C bis 200°C, vorzugsweise 90°C bis 150°C. Vorzugsweise wird bei erhöhtem Druck gearbeitet.

Gegebenenfalls kann die Mischung noch weitere Zusatzstoffe wie Gleitmittel beispielsweise Calciumstearat, Weichmacher, Antioxidantien, UV-Stabilisatoren, Farbstoffe, Pigmente, Füllstoffe, Verarbeitungshilfen, oder Peroxide wie Peroxodicarbonat zur Nachvernetzung enthalten. Das in Wasser redispergierbare Polymerpulver kann auch im Gemisch mit herkömmlichen Thermoplasten, Elastomeren und Duroplasten zugegeben werden

Das Verfahren eignet sich zur Herstellung der verschiedensten Formkörper auf Korkbasis. Beispiele hierfür sind Flaschenkorken, thermische und akustische Isoliermaterialien in Plattenform, Dichtungen, Dämpfungsmaterialien, Wandbeläge, Bodenbeläge und Büroartikel. Weitere Beispiele sind Materialien zur Verwendung in der Schuhindustrie, der Bekleidungsindustrie, der Möbel-, Sport-, Freizeit- und Bauindustrie.

Das Verfahren zeichnet sich dadurch aus, dass mit relativ geringen Mengen an redispergierbarem Polymerpulver Formkörper mit hoher mechanischer Festigkeit erhalten werden. Aufgrund des geringen Anteils an polymerem Bindemittel geht das natürliche Erscheinungsbild von Kork nicht verloren. Insbesondere bewirkt der Polyvinylalkohol-Anteil in den als bevorzugt genannten, mit Polyvinylalkohol stabilisierten, redisperpergierbaren Polymerpulvern eine hohe mechanische Festigkeit. Beim Einsatz von Polymerpulvern mit einer Tg des Basispolymerisats von -40°C bis +60°C erhält man Formkörper, welche sich bei hoher mechanischer Festigkeit noch durch hohe Elastizität auszeichnen.

Die nachfolgenden Beispiele dienen zur weiteren Erläuterung der Erfindung:

Zur Testung wurden folgende Materialien eingesetzt:
Redispergierbares Polymerpulver Vinnex LL 2504 der Wacker Chemie AG:
Ein mit Polyvinylalkohol stabilisiertes Polymerpulver auf der Basis eines Vinylacetat-Ethylen-Copolyners mit einer Tg von - 7°C.

Kork BD 0,5/1 von Amorin:
Korkpartikel mit einer Korngröße von 0.5 bis 1 mm.

Thermisch stabilisiertes, Weichmacher-haltiges S-PVC mit K-Wert 70 und einer Shore-Härte A von 70.

Die genannten Materialien wurden in den in der Tabelle genannten Mengenverhältnissen gemischt und zu Formkörpern verarbeitet.

Auf einem Collin-Zweiwalzwerk wurden die Gemische bei einer Temperatur von 150°C bis 170°C zu Walzfellen mit einer Dicke von 1 mm kalandriert.

Mit einer Collin-Standardpresse wurden die Gemische bei einer Temperatur von 150°C bis 170°C zu Pressplatten mit einer Dicke von 4 mm gepresst.

Die Dichte der Walzfelle wurde gemäß ISO 1183, die Dichte der Pressplatten gemäß ISO 1184 ermittelt.

Die Rückprallelastizität der Pressplatten wurde mit der Methode nach ISO 8307 und die Shore-Härte A der Pressplatten mit der Methode nach ISO 868 bestimmt.

Die mechanische Festigkeit der Walzfelle wurde im Zugversuch ermittelt und die Zugdehnung gemäß ISO 527-1/2 sowie die Reissfestigkeit gemäß ISO 527-1/3 ermittelt.

Die Ergebnisse sind in der Tabelle zusammengefasst.

**Tabelle:**

| Rezeptur | Bsp. 1 | Bsp. 2 | Bsp. 3 | Vbsp. 4 |
|---|---|---|---|---|
| | | | | |
| RD-Pulver [Gew.-Teile] | 20 | 30 | 40 | |
| Korkpartikel [Gew.-Teile] | 80 | 70 | 60 | 60 |
| S-PVC [Gew.-Teile] | | | | 40 |
| | | | | |
| Dichte Walzfell [kg/m³] | 0,4060 | 0,6373 | 0,6028 | 0,6376 |
| Dichte Pressplatte [kg/m³] | 0,6469 | 0,6644 | 0,7093 | 0,7044 |
| | | | | |
| Rückprall-Elastizität [%] | 28 | 24 | 20 | 23 |
| Shore-Härte A | 80,5 | 80,5 | 79,8 | 79,6 |
| | | | | |
| Zugdehnung [%] | 15,75 | 48,77 | 53,52 | 12,08 |
| Reissfestigkeit [mPa] | 3,21 | 4,51 | 5,82 | 2,51 |

Die Ergebnisse im Zugeversuch zeigen, dass man mit den erfindungsgemäß hergestellten Formkörpern deutlich bessere Dehnung und höhere Reissfestigkeit erhält (Beispiel 3), als mit den nach herkömmlicher Weise mit PVC gebundenen Korkformkörpern (Vergleichsbeispiel 4).

## Patentansprüche

1. Verfahren zur Herstellung von Formteilen aus Korkpartikeln wobei die Korkpartikel mit thermoplastischen Polymeren gebunden werden, **dadurch gekennzeichnet, dass** das thermoplastische Polymer in Form dessen in Wasser redispergierbaren Polymerpulvers, enthaltend ein oder mehrere Polymerisate, auf der Basis von einem oder mehreren Monomeren aus der Gruppe umfassend Vinylester, (Meth)acrylsäureester von unverzweigten oder verzweigten Alkoholen mit 1 bis 15 C-Atomen, Vinylaromaten, Olefine, 1,3-Diene und Vinylhalogenide und gegebenenfalls 0.1 bis 5 Gew.-%, bezogen auf das Gesamtgewicht des Monomergemisches, Hilfsmonomere, ein oder mehrere Schutzkolloide aus der Gruppe umfassend teilverseifte oder vollverseifte Polyvinylalkohole, Polyvinylpyrrolidone, Polyvinylacetale, Stärken, Cellulosen und deren Derivate, Proteine, Ligninsulfonate, Poly(meth)acrylamid, Polyvinylsulfonsäuren und deren wasserlöslichen Copolymere, Melaminformaldehydsulfonate, Naphthalinformaldehydsulfonate,
sowie gegebenenfalls Antiblockmittel, eingesetzt wird.

2. Verfahren nach Anspruch 1, **dadurch gekennzeichnet, dass** das in Wasser redispergierbare Polymerpulver ein Polymerisat enthält mit einer Glasübergangstemperatur Tg von -20°C bis +80°C.

3. Verfahren nach Anspruch 1 bis 2, **dadurch gekennzeichnet, dass**, das in Wasser redispergierbare Polymerpulver Homo- oder Mischpolymerisate enthält, welche ein oder mehrere Monomere aus der Gruppe Vinylacetat, Vinylester von αverzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten, und teilverseiften Polyvinylalkohol als Schutzkolloid enthält.

4. Verfahren nach Anspruch 1 bis 3, **dadurch gekennzeichnet, dass** die Korkpartikel in Form von Granulat oder Korkmehl mit einer Korngröße von 0,05 bis 5mm vorliegen.

5. Verfahren nach Anspruch 1 bis 4, **dadurch gekennzeichnet, dass** das in Wasser redispergierbare Polymerpulver in einem Anteil von 4 bis 70 Gew.-%, bezogen auf das Gesamtgewicht aus Kork und Polymer, zugegeben wird.

6. Verfahren nach Anspruch 1 bis 5, **dadurch gekennzeichnet, dass**, mittels der üblichen thermoplastischen Umformungstechniken wie Extrudieren, Spritzgießen, Verpressen, Granulieren und Kalandrieren zu Formkörpern verarbeitet wird.

7. Formteile aus Korkpartikeln erhältlich mittels Verfahren gemäß Anspruch 1 bis 6.

8. Verwendung der Formteile gemäß Anspruch 7 für Flaschenkorken, thermische und akustische Isoliermaterialien in Plattenform, Dichtungen, Dämpfungsmaterialien, Wandbeläge, Bodenbeläge und Büroartikel.

9. Verwendung der Formteile gemäß Anspruch 7 für Materialien zur Verwendung in der Schuhindustrie, der Bekleidungsindustrie, der Möbel-, Sport-, Freizeit- und Bauindustrie.

## Claims

1. Process for the production of moldings from cork particles, where the cork particles are bonded with thermoplastic polymers, **characterized in that** the thermoplastic polymer is used in the form of its water-redispersible polymer powder, comprising one or more polymers, on the basis of one or more monomers from the group consisting of vinyl esters, (meth)acrylic esters of unbranched or branched alcohols having from 1 to 15 carbon atoms, vinylaromatics, olefins, 1,3-dienes, and vinyl halides, and, if appropriate, from 0.1 to 5% by weight, based on the total weight of the monomer mixture, of auxiliary monomers, one or more protective colloids from the group consisting of partially hydrolyzed or fully hydrolyzed polyvinyl alcohols, polyvinylpyrrolidones, polyvinyl acetals, starches, celluloses and their derivatives, proteins, lignosulfonates, poly(meth)acrylamide, polyvinylsulfonic acids and their water-soluble copolymers, melamine-formal-dehydesulfonates, naphthalene-formaldehydesulfonates, and also, if appropriate, antiblocking agents.

2. Process according to Claim 1, **characterized in that** the water-redispersible polymer powder comprises a polymer whose glass transition temperature Tg is from -20°C to +80°C.

3. Process according to Claim 1 or 2, **characterized in that** the water-redispersible polymer powder comprises homo- or copolymers which comprise one or more monomers from the group of vinyl acetate, vinyl esters of α-branched monocarboxylic acids having from 9 to 11 carbon atoms, vinyl chloride, ethylene, methyl acrylate, methyl methacrylate, ethyl acrylate, ethyl methacrylate, propyl acrylate, propyl methacrylate, n-butyl acrylate, n-butyl methacrylate, 2-ethylhexyl acrylate, and styrene, and partially hydrolyzed polyvinyl alcohol, as protective colloid.

4. Process according to any of Claims 1 to 3, **characterized in that** the cork particles take the form of granules or cork flour whose grain size is from 0.05 to 5 mm.

5. Process according to any of Claims 1 to 4, **characterized in that** the water-redispersible polymer powder is added in a proportion of from 4 to 70% by weight, based on the total weight composed of the cork and polymer.

6. Process according to any of Claims 1 to 5, **characterized in that** the conventional thermoplastic forming techniques, such as extrusion, injection molding, pressing, granulation, and calendering, are used for processing to give moldings.

7. Moldings composed of cork particles obtainable by means of processes according to any of Claims 1 to 6.

8. Use of the moldings according to Claim 7 for bottle corks, thermal and acoustic insulation materials in sheet form, gaskets, damping materials, wallcoverings, floorcoverings, and office items.

9. Use of the moldings according to Claim 7 for materials for use in the shoe industry, in the apparel industry, in the furniture industry, in the sports industry, in the leisure industry, and in the construction industry.

## Revendications

1. Procédé pour la production de pièces moulées à base de particules de liège, les particules de liège étant liées par des polymères thermoplastiques, **caractérisé en ce que** le polymère thermoplastique est utilisé sous forme de sa poudre de polymère redispersable dans l'eau, contenant un ou plusieurs produits de polymérisation à base d'un ou plusieurs monomères choisis dans le groupe comprenant des esters vinyliques, des esters d'acide (méth)acrylique d'alcools ramifiés ou non ramifiés ayant de 1 à 15 atomes de carbone, des composés vinylaromatiques, des oléfines, des 1,3-diènes et des halogénures de vinyle et éventuellement 0,1 à 5 % en poids, par rapport au poids total du mélange de monomères, de monomères auxiliaires, un ou plusieurs colloïdes protecteurs choisis dans le groupe comprenant des poly(alcool vinyliques) partiellement saponifiés ou totalement saponifiés, des polyvinylpyrrolidones, des polyvinylacétals, des amidons, des celluloses et leurs dérivés, des protéines, des ligninesulfonates, un poly(méth)-acrylamide, des poly(acide vinylsulfonique)s et leurs copolymères hydrosolubles, des mélamine-formaldéhyde-sulfonates, des naphtalène-formaldéhyde-sulfonates,
ainsi qu"éventuellement des agents anti-adhérence de contact.

2. Procédé selon la revendication 1, **caractérisé en ce que** la poudre de polymère redispersable dans l'eau contient un produit de polymérisation ayant une température de transition vitreuse Tg de -20 °C à +80 °C.

3. Procédé selon les revendications 1 et 2, **caractérisé en ce que** la poudre de polymère redispersable dans l'eau contient des homo- ou copolymères qui contiennent un ou plusieurs monomères choisis dans le groupe constitué par l'acétate de vinyle, des esters vinyliques d'acides monocarboxyliques α-ramifiés ayant de 9 à 11 atomes de carbone, le chlorure de vinyle, l'éthylène, l'acrylate de méthyle, le méthacrylate de méthyle, l'acrylate d'éthyle, le méthacrylate d'éthyle, l'acrylate de propyle, le méthacrylate de propyle, l'acrylate de n-butyle, le méthacrylate de n-butyle, l'acrylate de 2-éthyl-hexyle, le styrène, et du poly(alcool vinylique) partiellement saponifié en tant que colloïde protecteur.

4. Procédé selon les revendications 1 à 3, **caractérisé en ce que** les particules de liège se trouvent sous forme de produit granulé ou de poudre de liège ayant une taille de grain de 0,05 à 5 mm.

5. Procédé selon les revendications 1 à 4, **caractérisé en ce que** la poudre de polymère redispersable dans l'eau est ajoutée en une proportion de 4 à 70 % en poids, par rapport au poids total du liège et du polymère.

6. Procédé selon les revendications 1 à 5, **caractérisé en ce qu'**on effectue la transformation en corps moulés à l'aide de techniques thermoplastiques usuelles de mise en forme, telles qu'extrusion, moulage par injection, pressage, granulation et calandrage.

7. pièces moulées à base de particules de liège, pouvant être obtenues par les procédés selon les revendications 1 à 6.

8. Utilisation des pièces moulées selon la revendication 7, pour des bouchons, des matériaux d'isolation thermique ou acoustique sous forme de plaques, des matériaux d'étanchéité, des matériaux d'amortissement, des revêtements de murs, des revêtements de sols et des articles de bureau.

9. Utilisation des pièces moulées selon la revendication 7, pour des matériaux destinés à l'utilisation dans l'industrie de la chaussure, l'industrie du vêtement, l'industrie du meuble, des articles de sport et de loisir et l'industrie du bâtiment.
